(19) Europäisches Patentamt / European Patent Office / Office européen des brevets

(11) **EP 4 265 336 A1**

(12) **EUROPEAN PATENT APPLICATION**
published in accordance with Art. 153(4) EPC

(43) Date of publication:
**25.10.2023 Bulletin 2023/43**

(21) Application number: **21910670.5**

(22) Date of filing: **20.12.2021**

(51) International Patent Classification (IPC):
**B03B 5/00** (2006.01)   **G01N 37/00** (2006.01)
**B01J 19/00** (2006.01)

(52) Cooperative Patent Classification (CPC):
**B01J 19/00; B03B 5/00; G01N 37/00**

(86) International application number:
**PCT/JP2021/046912**

(87) International publication number:
**WO 2022/138525 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020   JP 2020211418**

(71) Applicant: **IHI Corporation
Tokyo 135-8710 (JP)**

(72) Inventors:
• **IKEDA, Ryosuke**
**Tokyo 135-8710 (JP)**
• **ISO, Yoshiyuki**
**Tokyo 135-8710 (JP)**
• **YAMASHITA, Tatsuya**
**Tokyo 135-8710 (JP)**

(74) Representative: **TBK
Bavariaring 4-6
80336 München (DE)**

(54) **SOLID-LIQUID SEPARATION DEVICE AND SOLID-LIQUID SEPARATION SYSTEM**

(57)    A solid-liquid separator (1) that separates solid particles (p) from a fluid in which the solid particles (p) are dispersed includes a flow channel part (2) where a linear flow channel (7) into which the fluid is introduced is formed; and an ultrasonic vibrator (3) as a secondary flow generation mechanism that generates a secondary flow in a cross-section direction in the fluid flowing on an upstream side of the flow channel (7). The flow channel (7) includes a rectangular cross section defined by a flow channel width (w) and a flow channel height (h) perpendicular to the flow channel width (w). An aspect ratio ($A_R$) of the cross section at least on a downstream side from the secondary flow generation mechanism in the flow channel (7) is in a range from 10 to 100, the aspect ratio ($A_R$) being expressed by a ratio of the flow channel width (w) to the flow channel height (h).

FIG. 1

EP 4 265 336 A1

## Description

TECHNICAL FIELD

The present disclosure relates to a solid-liquid separator and a solid-liquid separation system using the solid-liquid separator.

BACKGROUND ART

In the past, in various fields such as industry and medicine, the technology of separating solid particles dispersed in a fluid under desired conditions has been used for manufacturing or analytical processing. Patent Literature 1 discloses a technology related to a solid-liquid separator that separates fine particles using two types of flow channels, which are an arrangement flow channel provided on an upstream side and a separation flow channel provided on a downstream side. The arrangement flow channel arranges the fine particles in the fluid by means of inertial force. Meanwhile, the separation flow channel receives the fluid in which the fine particles are arranged from the arrangement flow channel, and ultimately separates the fine particles according to each desired particle diameter by means of trajectories defined by a large number of columns.

CITATION LIST

PATENT LITERATURE

Patent Literature 1: Japanese Unexamined Patent Application Publication No. 2018-89557

SUMMARY OF THE INVENTION

In the solid-liquid separator disclosed in Patent Literature 1, the separation flow channel has a complex geometry in which a large number of columns are formed. Meanwhile, the cross sectional shape of the arrangement flow channel is set in various ways from the viewpoint of arranging the fine particles and is set differently from the cross sectional shape of the separation flow channel. Therefore, the overall flow channel provided in the solid-liquid separator cannot be said to have a simple shape or configuration.

An object of the present disclosure is to provide a solid-liquid separator and a solid-liquid separation system that are advantageous in enhancing separation efficiency with a simple shape or configuration.

SOLUTION TO PROBLEM

An aspect of the present disclosure provides a solid-liquid separator that separates solid particles from a fluid in which the solid particles are dispersed, the solid-liquid separator including: a flow channel part where a linear flow channel into which the fluid is introduced is formed; and a secondary flow generation mechanism that generates a secondary flow in a cross-section direction in the fluid flowing on an upstream side of the flow channel, in which the flow channel includes a rectangular cross section defined by a flow channel width and a flow channel height perpendicular to the flow channel width, and an aspect ratio of the cross section at least on a downstream side from the secondary flow generation mechanism in the flow channel is in a range from 10 to 100, the aspect ratio being expressed by a ratio of the flow channel width to the flow channel height.

In the solid-liquid separator described above, if a particle diameter of the solid particles is in a range from 1 $\mu$m to 1 mm, the flow channel height may be set to a dimension not less than 10 times and not more than 100 times the particle diameter of the solid particles to be separated. A length in a direction of extension on the downstream side from the secondary flow generation mechanism in the flow channel may be set to a dimension not less than 100 times and not more than 10,000 times the flow channel width. Further, the secondary flow generation mechanism may be an ultrasonic vibrator that is installed in the flow channel part and emits an ultrasonic wave from a sidewall on a long side of the flow channel toward an inside of the flow channel. Alternatively, the secondary flow generation mechanism may be a flow channel shape changing part that is formed in the flow channel part and changes a shape of at least a part of the cross section in a direction of extension of the flow channel.

A solid-liquid separation system according to another aspect of the present disclosure includes: a solid-liquid separator that separates solid particles from a fluid in which the solid particles are dispersed; a storage tank that stores the fluid; a liquid transporting part that transports the fluid from the storage tank to the solid-liquid separator; and a controller that adjusts at least a flow rate or a velocity of the fluid by at least controlling an operation of the liquid transporting part, in which the solid-liquid separator includes: a flow channel part where a linear flow channel into which the fluid is introduced is formed; and a secondary flow generation mechanism that generates a secondary flow in a cross-section direction in the fluid flowing on an upstream side of the flow channel, the flow channel includes a rectangular cross section defined by a flow channel width and a flow channel height perpendicular to the flow channel width, and an aspect ratio of the cross section at least on a downstream side from the secondary flow generation mechanism in the flow channel is in a range from 10 to 100, the aspect ratio being expressed by a ratio of the flow channel width to the flow channel height.

In the solid-liquid separation system described above, the solid particles dispersed in the fluid may receive drag induced by the secondary flow and lift induced by a main stream of the fluid, and the lift may be obtained based on a particle diameter of the solid particles to be separated. The flow channel height may be determined based on the lift obtained with the particle diameter of the solid particles to be separated as a reference. The drag may be determined so as to balance with the lift in the cross-section direction inside a boundary layer of the fluid. Further, the secondary flow generation mechanism may be an ultrasonic vibrator that is installed in the flow channel part and emits an ultrasonic wave from a sidewall on a long side of the flow channel toward an inside of the flow channel. The solid-liquid separation system may include an ultrasonic oscillator that supplies power to the ultrasonic vibrator, and the controller may adjust the drag by changing the velocity of the secondary flow by changing a frequency or sound pressure of the ultrasonic vibrator relative to the ultrasonic oscillator.

According to the present disclosure, it is possible to provide a solid-liquid separator and a solid-liquid separation system that are advantageous in enhancing separation efficiency with a simple shape or configuration.

BRIEF DESCRIPTION OF DRAWINGS

Fig. 1 is a schematic diagram showing the configuration of a solid-liquid separator according to a first embodiment of the present disclosure.
Fig. 2 is a diagram for explaining the principle of solid-liquid separation performed by the solid-liquid separator according to the first embodiment.
Fig. 3 is a graph showing the particle concentration in a flow channel width direction based on luminance values.
Fig. 4 is a graph showing the relationship between the particle diameter of solid particles and lift received by the solid particles.
Fig. 5 is a graph showing the relationship between the flow channel height and the lift received by the solid particles.
Fig. 6 is a graph showing the setting range of lift and drag relative to the particle diameter of the solid particles.
Fig. 7 is a schematic diagram showing the configuration of a solid-liquid separator according to a second embodiment of the present disclosure.
Fig. 8 is a schematic diagram showing the configuration of a solid-liquid separator according to a third embodiment of the present disclosure.
Fig. 9 is a schematic diagram showing the configuration of a solid-liquid separator according to a fourth embodiment of the present disclosure.
Fig. 10 is a cross sectional view of a portion of the flow channel part, which corresponds to the section C-C in Fig. 9.
Fig. 11 is a schematic diagram for explaining the shape and arrangement relationship of baffles.
Fig. 12 is a fluid image showing the behavior of solid particles in a fluid that has passed the plurality of baffles.
Fig. 13A is a schematic diagram showing the configuration of a cell culture device as a solid-liquid separation system of the present disclosure.
Fig. 13B is a schematic diagram showing the configuration of a precipitation device as the solid-liquid separation system of the present disclosure.

DESCRIPTION OF EMBODIMENTS

In the following, some illustrative embodiments will be described with reference to the drawings. The dimensions, materials, and other specific numerical values shown in each embodiment are for illustrative purposes only, and are not intended to limit this disclosure unless otherwise noted. In addition, duplicate descriptions are omitted for elements having substantially the same functions and configurations by appending the same reference numerals thereto, and illustrations are omitted for elements not directly related to this disclosure.

(Solid-liquid separator)

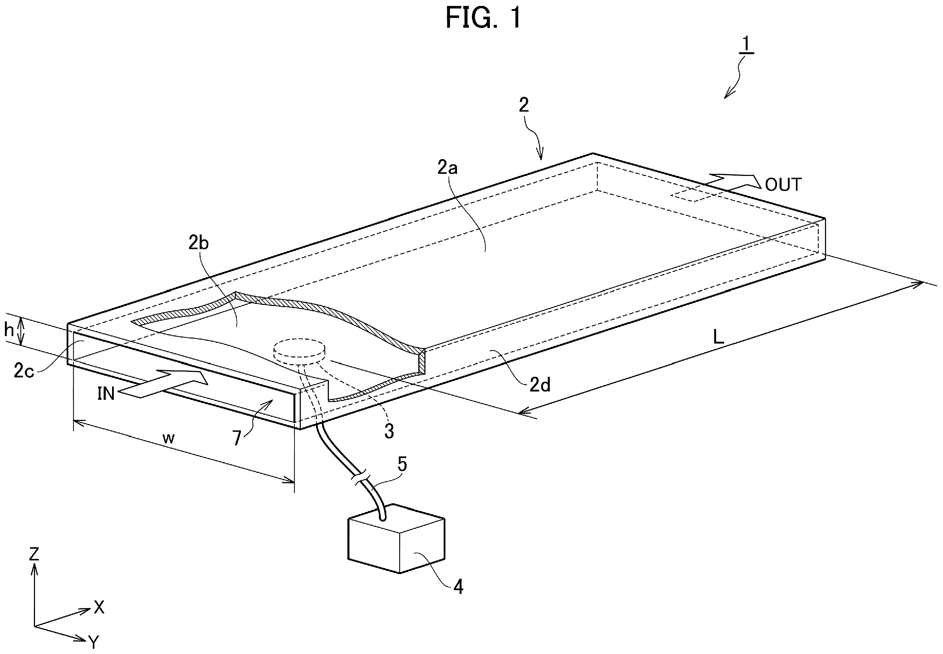

Fig. 1 is a schematic diagram showing the configuration of a solid-liquid separator 1 according to a first embodiment. The solid-liquid separator 1 separates solid particles p from the fluid in which the solid particles p are dispersed. The fluid in which the solid particles p are dispersed is, in a general sense, a liquid (a particle dispersion liquid) containing a large number of solid particles p. In the present embodiment, assuming that solid particles p of various particle diameters $D_p$ (particle sizes) are pre-dispersed in the fluid, solid-liquid separation basically means separating solid particles p of a specific particle diameter $D_p$ from solid particles p of various particle diameters $D_p$. Further, in the present embodiment, the solid particles p are assumed to be fine particles of which the particle diameter $D_p$ is minute. Specifically, a possible particle diameter $D_p$ of the solid particles p to be separated by the solid-liquid separator 1 is in the range from 1 $\mu$m to 1 mm.

The solid-liquid separator 1 includes a flow channel part 2 and a secondary flow generation mechanism.

The flow channel part 2 is a body part having a linear flow channel 7 into which the fluid is introduced and flows. In the present embodiment, the flow channel part 2 is a straight tube having the flow channel 7 of which the cross section is rectangular. The term "linear" representing the overall shape of the flow channel 7 means that the direction of extension of the flow channel 7 is along one direction which is the X direction in Fig. 1. However, the term "linear" here is not strictly limited to a straight line and some bending is allowed. For example, the flow channel part 2 may be a tube with some bending to the extent that the fluid flowing through the flow channel 7 is less susceptible to drag induced by secondary flow due to the shape of the flow channel. Further, the shape of the rectangular cross section is not a shape that is to be strictly interpreted geometrically, and some bending is allowed at the sides themselves or the presence of some bending at continuous parts between the sides is allowed.

Further, in Fig. 1, the direction in which the fluid is introduced into the flow channel 7 (IN) and the direction in which the fluid is discharged from the flow channel 7 (OUT) are indicated by blank arrows. The opening of the flow channel part 2 on the side where the fluid is introduced is connected to a fluid supply mechanism. Meanwhile, the opening of the flow channel part 2 on the side where the fluid is discharged is connected at least to a receiving mechanism for the separated solid particles p. Fig. 1 does not show the supply mechanism for the fluid or the receiving mechanism for the solid particles p.

The flow channel part 2 has four sidewalls defining the shape of the flow channel 7, which are a first sidewall 2a, a second sidewall 2b, a third sidewall 2c, and a fourth sidewall 2d. Since the flow channel part 2 is a straight tube in the present embodiment, these sidewalls are tube walls. Among these sidewalls, the first sidewall 2a and the second sidewall 2b face each other and are sidewalls corresponding to the respective long sides in the cross section. Meanwhile, the third sidewall 2c and the fourth sidewall 2d face each other and are sidewalls corresponding to the respective short sides in the cross section. If the direction of extension of the flow channel 7 is along the X direction, the cross section of the flow channel 7 defined by these sidewalls is the YZ cross section. In this case, the long sides in the cross section of the flow channel 7 are along the Y direction and are defined as the flow channel width w below. Meanwhile, the short sides in the cross section of the flow channel 7 are along the Z direction and are defined as the flow channel height h below. That is, the flow channel height h is perpendicular to the flow channel width w in the cross section. Hereinafter, the Y direction may be expressed as the flow channel width direction and the Z direction may be expressed as the flow channel height direction.

In the present embodiment, an aspect ratio $A_R$ ($A_R = w/h$) expressed as the ratio between the flow channel width w and the flow channel height h is in the range from 10 to 100. In addition, if the particle diameter $D_p$ of the solid particles p to be separated is in the range from 1 $\mu$m to 1 mm, the flow channel height h is set to a dimension not less than 10 times and not more than 100 times the particle diameter $D_p$. The flow channel width w is derived from the specific values of the aspect ratio $A_R$ and the flow channel height h.

The secondary flow generation mechanism generates secondary flow in the cross-section direction in the fluid flowing on the upstream side of the flow channel 7. In the present embodiment, the secondary flow generation mechanism is an ultrasonic vibrator 3 that emits ultrasonic waves toward the inside of the flow channel 7. If the secondary flow generation mechanism is the ultrasonic vibrator 3, the solid-liquid separator 1 further includes an ultrasonic oscillator (an ultrasonic amplifier) 4 that supplies power to the ultrasonic vibrator 3 and a power cable 5 that supplies power from the ultrasonic oscillator 4 to the ultrasonic vibrator 3. In addition, the solid-liquid separator 1 has a power cable or the like that supplies power to the ultrasonic oscillator 4.

The ultrasonic vibrator 3 is a flat plate type piezoelectric element that can be installed on the outer surface of the flow channel part 2 and can generate ultrasonic waves in the MHz band, for example. The ultrasonic vibrator 3 is installed on the outer surface of at least the second sidewall 2b, which corresponds to a sidewall on a longer side of the cross section of the flow channel 7, and on the upstream side of the flow channel 7. In the present embodiment, as an example, it is assumed that one ultrasonic vibrator 3 is installed on the outer surface of the second sidewall 2b. However, in addition to the outer surface of the second sidewall 2b, another ultrasonic vibrator 3 may be installed on the outer surface of the first sidewall 2a, which also corresponds to a sidewall on a longer side of the cross section of the flow channel 7, for example. In addition, not only one ultrasonic vibrator 3 but also a plurality of ultrasonic oscillators 3 may be installed on the outer surface of one of the sidewalls, the second sidewall 2b for example. Further, in the flow channel width direction, the ultrasonic vibrator 3 is preferably installed in the center region of the flow channel w.

In addition, the length L on the downstream side from the ultrasonic vibrator 3 out of the length of the flow channel 7 in the extension direction is defined based on the installation location of the ultrasonic vibrator 3, which is the secondary flow generation mechanism, in other words, based on the location where secondary flow is generated in the fluid. This length L is set to a dimension not less than 100 times and not more than 10,000 times the flow channel width w.

Next, the principle of solid-liquid separation performed by the solid-liquid separator 1 will be described.

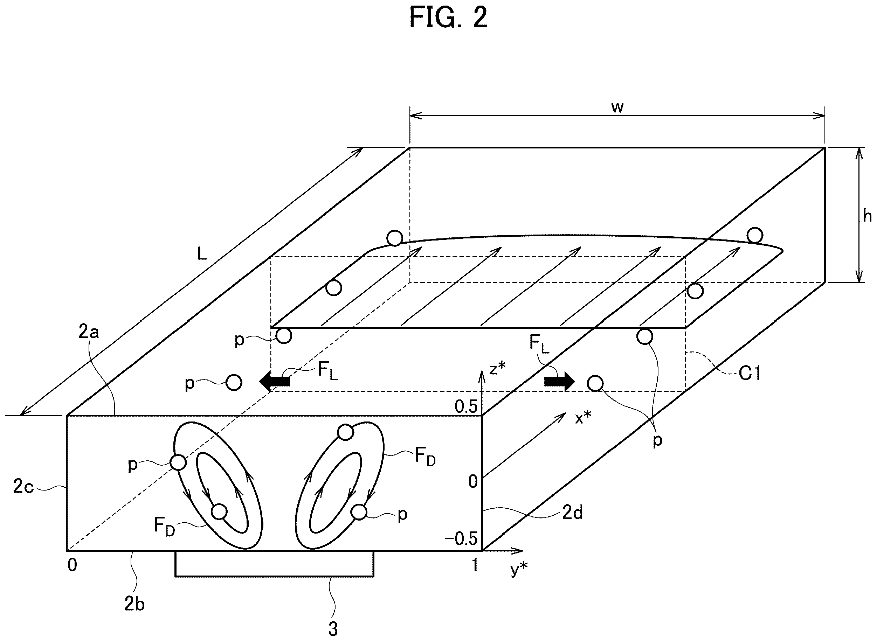

Fig. 2 is a conceptual diagram for explaining the principle of solid-liquid separation performed by the solid-liquid separator 1. Fig. 2 shows the flow of fluid in the region on the downstream side from the ultrasonic vibrator 3 in the flow channel 7 and the state of the solid particles p dispersed in the fluid. Fig. 2 also shows each direction in the flow channel 7 as directions of three axes with asterisks. Especially, the length in the y* direction corresponding to the flow channel width, and the z* direction corresponding to the flow channel height direction is indicated as a ratio rather than a specific dimension value.

First, when the ultrasonic oscillator 4 loads the ultrasonic vibrator 3 with a sine wave voltage signal in the MHz band, an ultrasonic traveling wave is generated in the flow channel height direction in the fluid flowing on the upstream side of the flow channel 7. Then, with the spatial gradient of sound pressure due to the viscous damping of the traveling wave as a driving force, a spiral acoustic flow is generated in the fluid in the flow channel 7. This acoustic flow is the secondary flow in the cross-section direction. Due to the secondary flow in the cross-section direction, the solid particles p dispersed in the fluid receive the drag $F_D$ induced by the secondary flow. As a result, in the flow channel 7 on the downstream side from the area where the ultrasonic vibrator 3 is installed, the solid particles p are gradually transported toward the third sidewall 2c or the fourth sidewall 2d, which are sidewalls on the short sides, by the drag $F_D$ induced by the secondary flow.

Meanwhile, since the cross section of the flow channel 7 is preset such that the aspect ratio $A_R$ is in the range from 10 to 100, the main stream of the fluid flowing through the linear flow channel 7 induces the lift $F_L$. As a result, the solid particles p dispersed in the fluid receive the lift $F_L$ induced by the main stream and are trapped in the vicinity of the third and fourth sidewalls 2c and 2d, which are both sidewalls on the short sides in the flow channel 7 (a tubular-pinch effect). Fig. 2 shows, as an example, the velocity distribution at the center of a boundary layer in an arbitrary cross section C1.

That is, in the solid-liquid separator 1, the solid particles p in the fluid are transported in the direction of the third sidewall 2c or the fourth sidewall 2d by the drag $F_D$ induced by the secondary flow, and are further trapped in the vicinity of the third sidewall 2c or the fourth sidewall 2d by the lift $F_L$ induced by the main stream.

Individual tests for the principle of solid-liquid separation performed by the solid-liquid separator 1 will be described below.

First, the behavior of the solid particles p in the flow channel 7 when the cross section aspect ratio $A_R$ is set to a high aspect ratio as described above is clear from the following text.

As a device for testing, a straight tube with a rectangular cross section made of transparent acrylic was prepared assuming the flow channel part 2 where the flow channel 7 is formed. The flow channel in the straight tube satisfies the shape condition of the flow channel 7 in the flow channel part 2, and a description will be give below with the same reference numerals being given to each part. However, the secondary flow generation mechanism is not adopted here because the test is for the behavior of the solid particles p depending on the cross sectional shape of the flow channel 7.

The various setting conditions at the time of testing are as follows. The solid particles p to be separated are neutral suspended particles with a particle diameter $D_p$ of 10 $\mu$m. The fluid in which a large number of the solid particles p are dispersed is made to flow through the flow channel 7 for testing under conditions of a constant flow rate of 250 mL/min and a Reynolds number Re of 1500. The flow channel width w of the flow channel 7 for testing is set to 5 mm, the flow channel height h is set to 0.4 mm, and the length from an inlet to the downstream side from the fluid in the flow channel 7 in the extension direction is set to 1200 mm. In this case, the aspect ratio $A_R$ is 12.5. The flow channel height h is 40 times the particle diameter $D_p$. In addition, the length of the flow channel 7 in the extension direction is 240 times the flow channel width w, assuming that the length is equivalent to the length L defined above on the downstream side from the secondary flow generation mechanism. Therefore, all these dimension values satisfy various conditions presented in the explanation made with reference to Fig. 1.

Under the above setting conditions, while the fluid in which the solid particles p were dispersed was flowing through the flow channel 7, the flow channel 7 was irradiated with light to measure the luminance.

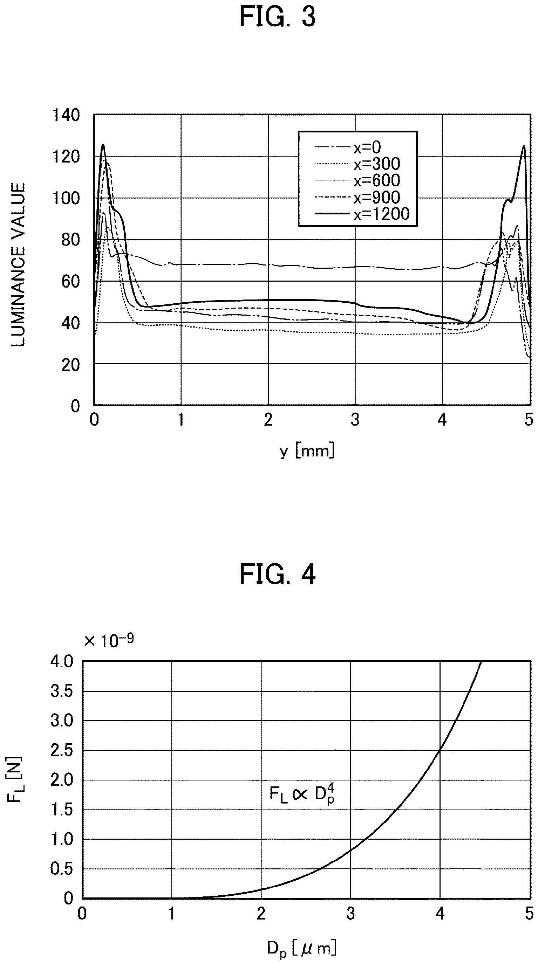

Fig. 3 is a graph showing the particle concentration in the flow channel width direction based on luminance values. The horizontal axis in Fig. 3 indicates the position y in the flow channel width direction, and according to the definition of the y* direction shown in Fig. 2, the position of the third sidewall 2c is defined as 0 mm and the position of the fourth sidewall 2d is defined as 5 mm. The vertical axis in Fig. 3 indicates the luminance value. The luminance value is proportional to the particle concentration. As an explanatory note, each value of x indicates the distance from the inlet to the downstream side from the fluid in the flow channel 7 in the extension direction according to the definition of the x* direction shown in Fig. 2.

With reference to Fig. 3, it can be seen that as the fluid moves toward the downstream side from the inlet (x = 0) of the fluid in the flow channel 7, the luminance values in the vicinity of the third sidewall 2c (y = 0) and in the vicinity of the fourth sidewall 2d (y = 5 mm) increase, that is, the particle concentration increases. At this time, the concentration ratio between a high concentration region and a low concentration region is about 3 to 4 at the maximum. In addition, the boundary layer thickness of the fluid is equivalent to the flow channel height h. From this, it is considered that a steep velocity gradient appears in the vicinity of the third sidewall 2c and in the vicinity of the fourth sidewall 2d in the linear flow channel 7 with a rectangular cross section of which the aspect ratio $A_R$ is in the range from 10 to 100. Further, inside the boundary layer of the fluid, it is predicted that the lift $F_L$ in the flow channel width direction acts on the solid particles p, and the solid particles p become concentrated in the vicinity of the third sidewall 2c and in the vicinity of the fourth sidewall 2d.

In addition, the following relationship exists between the lift $F_L$ induced by the main stream and the drag $F_D$ induced by the secondary flow.

The effective range of the drag $F_D$ induced by the secondary flow is finite from the position of the ultrasonic vibrator 3, which is the secondary flow generation mechanism, in the direction of extension of the flow channel 7 due to the damping caused by the viscosity of the fluid. In this regard, in the present embodiment, the secondary flow inducing the drag $F_D$ is generated in a part of the linear flow channel 7, which has the same cross section as the region where the main stream inducing the lift $F_L$ flows. Therefore, it is advantageous to cause the lift $F_L$ to act effectively while the drag $F_D$ is acting on the solid particles p.

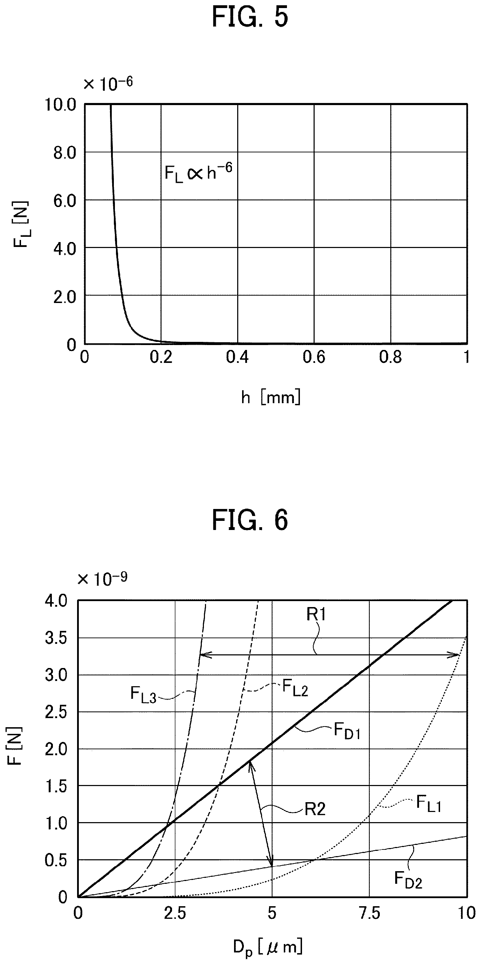

Fig. 4 is a graph showing the relationship between the particle diameter $D_p$ of the solid particles p and the lift $F_L$ that the solid particles p receive. The positions of the solid particles p in the fluid are set at the center of the boundary layer as shown in Fig. 2, and the flow rate of the fluid flowing through the flow channel 7 is assumed to be a constant flow rate of 100 mL/min. The lift $F_L$ induced by the main stream increases in proportion to the fourth power of the particle diameter $D_p$ as shown in Fig. 4. Meanwhile, the drag $F_D$ induced by the secondary flow, shown in relation to Fig. 6 below, increases in proportion to the particle diameter $D_p$.

Fig. 5 is a graph showing the relationship between the flow channel height h and the lift $F_L$ received by the solid particles p. In this case, each condition such as the flow rate is the same as each condition in Fig. 4. The lift $F_L$ decreases in proportion to about the minus 6th power of the flow channel height h. In other words, as can be seen by referring to Figs. 4 and 5, the lift $F_L$ can be adjusted to have an effective magnitude by setting the flow channel height h appropriately with the particle diameter $D_p$ of the solid particles p to be separated as a reference.

Fig. 6 is a graph showing the setting ranges of both the lift $F_L$ and the drag $F_D$ for the particle diameter $D_p$ of the solid particles p. In Fig. 6, the lift $F_L$, which is proportional to the fourth power of the particle diameter $D_p$, is shown by changing the main stream Reynolds number Re in three levels. A first lift $F_{L1}$ is the lift $F_L$ when the Reynolds number Re is adjusted to 0.01, a second lift $F_{L2}$ is the lift $F_L$ when the Reynolds number Re is adjusted to 0.05, and a third lift $F_{L3}$ is the lift $F_L$ when the Reynolds number Re is adjusted to 0.1. Meanwhile, in Fig. 6, the drag $F_D$ proportional to the particle diameter $D_p$ is shown by changing the representative velocity U of the secondary flow in two levels. A first drag $F_{D1}$ is the drag $F_D$ when the representative velocity U is adjusted to 0.05 m/s and a second drag $F_{D2}$ is the drag $F_D$ when the representative velocity U is adjusted to 0.01 m/s.

In Fig. 6, the range between the first lift $F_{L1}$ and the third lift $F_{L3}$ is defined as a first setting range R1, which is the setting range of the lift $F_L$. Meanwhile, the range between the first drag $F_{D1}$ and the second drag $F_{D2}$ is defined as a second setting range R2, which is the setting range of the drag $F_D$. At this time, the overlap range between the first setting range R1 and the second setting range R2 is the range where the lift $F_L$ and the drag $F_D$ are balanced, that is, the range where the lift $F_L$ and the drag $F_D$ are mechanically in equilibrium. In other words, if the secondary flow is used for the solid-liquid separation, the equilibrium diameter and equilibrium position for the solid particles p to be separated are determined depending on the lift $F_L$ induced by the main stream or the drag $F_D$ induced by the secondary flow.

Here, the equilibrium diameter refers to the particle diameter $D_p$ of the solid particles p concentrated at a specific position in the flow channel 7, which is determined based on the lift $F_L$ and the drag $F_D$ in mechanical equilibrium. Meanwhile, the equilibrium position refers to possible values of the lift $F_L$ and the drag $F_D$ in mechanical equilibrium, which are determined based on a specific particle diameter $D_p$ of the solid particles p to be separated (the position where the solid particles p are concentrated according to the values).

In other words, if the Reynolds number Re of the main stream and the representative velocity U of the secondary flow are set appropriately such that the lift $F_L$ and the drag $F_D$ are in mechanical equilibrium, while considering the particle diameter $D_p$ of the solid particles p to be separated, it becomes easier to concentrate the solid particles p in the vicinity of the sidewalls on the short sides of the flow channel 7.

Next, the effect of the solid-liquid separator 1 according to the present embodiment will be described.

The solid-liquid separator 1 for separating the solid particles p from the fluid in which the solid particles p are dispersed includes the flow channel part 2 having the linear flow channel 7 into which the fluid is introduced, and the secondary flow generation mechanism for generating the secondary flow in the cross-section direction in the fluid flowing on the upstream side of the flow channel 7. The flow channel 7 has the rectangular cross section defined by the flow channel width w and the flow channel height h perpendicular to the flow channel width w. The aspect ratio $A_R$, expressed as the ratio between the flow channel width w and the flow channel height h, of the cross section at least on the downstream side from the secondary flow generation mechanism in the flow channel 7 is in the range from 10 to 100.

First, since the aspect ratio $A_R$ of the cross section of the flow channel 7 formed in the flow channel part 2 is preset in the above range, the main stream of the fluid flowing through the flow channel 7 induces the lift $F_L$, and the solid particles p dispersed in the fluid receive the lift $F_L$ induced by the main stream. This can trap the solid particles p in the vicinity of the third and fourth sidewalls 2c and 2d, which are the sidewalls on the short sides in the flow channel 7.

In addition, since the secondary flow generation mechanism generates the secondary flow in the cross-section direction in the fluid flowing on the upstream side of the flow channel 7, the solid particles p dispersed in the fluid receive the drag $F_D$ induced by the secondary flow. As a result, in the flow channel 7 on the downstream side from the part where the secondary flow generation mechanism is installed or formed, the solid particles p can be transported toward the third sidewall 2c and the fourth sidewall 2d, which are the sidewalls on the short sides. Therefore, with the solid-liquid separator 1, the separation efficiency can be enhanced to a greater extent than when the solid particles p are separated only by means of the lift $F_L$ induced by the main stream of the fluid, for example.

Further, with a conventional solid-liquid separator, the lift and drag are induced in the same region in the flow channel and the solid particles are separated or the geometry of the flow channel is complicated, for example. In these cases, it is conceivable that if one tries to obtain the desired resolution of separation, that is, if one tries to expand the selection range of the particle diameters of the solid particles to be separated, the processing volume decreases, and conversely, if one tries to increase the processing volume, it becomes difficult to obtain the desired resolution. Meanwhile, in the solid-liquid separator 1, the part where the drag $F_D$ is induced in the fluid and the part where the lift $F_L$ is induced in the fluid are independent of each other on the upstream side and the downstream side from the flow channel 7. That is, since the solid-liquid separator 1 can independently adjust the lift $F_L$ and the drag $F_D$, it is possible to easily obtain the desired resolution while maintaining the processing volume. The solid-liquid separator 1 can, in principle, separate the solid particles p with the particle diameter $D_p$ in the range from 1 μm to 1 mm at the processing volume of 100 mL/min.

Meanwhile, the cross section of the flow channel 7 at least on the downstream side from the secondary flow generation mechanism has a simplified shape unified with fixed dimensions. In addition, depending on the configuration or shape of the secondary flow generation mechanism, the cross section shape of the region where the secondary flow is generated by the secondary flow generation mechanism in the flow channel 7 can be the same as the cross section shape of the region where the main stream that induces the lift $F_L$ flows. Therefore, in the solid-liquid separator 1, the shape or configuration of the flow channel part 2 is simplified.

In this way, according to the present embodiment, it is possible to provide the solid-liquid separator 1, which is advantageous for enhancing separation efficiency with a simple shape or configuration.

In addition, in the solid-liquid separator 1, if the particle diameter $D_p$ of the solid particles p is in the range from 1 μm to 1 mm, the flow channel height h may be set to a dimension not less than 10 times and not more than 100 times the particle diameter $D_p$ of the solid particles p to be separated.

With the solid-liquid separator 1, it is possible to further enhance the separation effect by means of the lift $F_L$ induced by the main stream of the fluid and the drag $F_D$ induced by the secondary flow of the fluid.

In addition, in the solid-liquid separator 1, the length L on the downstream side from the secondary flow generation mechanism in the flow channel 7 in the extension direction may be set to a dimension not less than 100 times and not more than 10,000 times the flow channel width w.

With the solid-liquid separator 1, it is possible to further enhance the separation effect by means of the lift $F_L$ induced by the main stream of the fluid and the drag $F_D$ induced by the secondary flow of the fluid.

In addition, in the solid-liquid separator 1, the secondary flow generation mechanism may be the ultrasonic vibrator 3 that is installed in the flow channel part 2 and emits ultrasonic waves from a sidewall (first sidewall 2a and/or second sidewall 2b) on a long side of the flow channel 7 toward the inside of the flow channel 7.

With the solid-liquid separator 1, the velocity of the secondary flow can be changed with a simple configuration when the secondary flow is generated to the fluid flowing through the flow channel 7. In this case, in the solid-liquid separator 1, the ultrasonic vibrator 3 functions as what is referred to as an active solid-liquid separation mechanism, and the flow channel 7 itself on the downstream side from the part where the ultrasonic vibrator 3 is installed functions as what is referred to as a passive solid-liquid separation mechanism. Therefore, the controllability of the fluid force is enhanced, making it easier to adjust the drag $F_D$ that induces the secondary flow, for example, and the range of the solid particles p that can be separated is increased. As a result, the versatility of the solid-liquid separator 1 can be enhanced.

(Second embodiment)

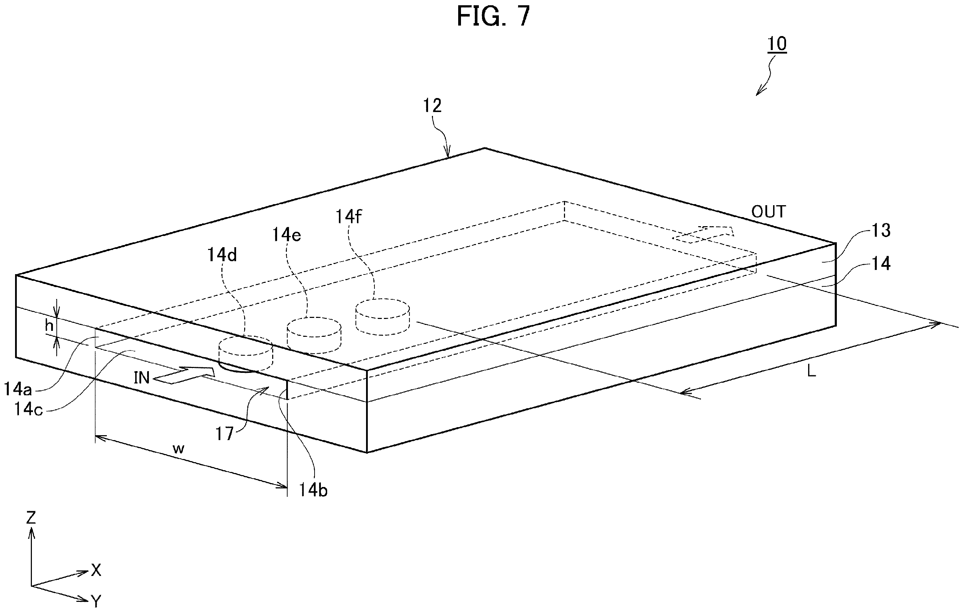

Fig. 7 is a schematic diagram showing the configuration of a solid-liquid separator 10 according to a second embodiment. In the solid-liquid separator 1 according to the first embodiment described above, the ultrasonic vibrator 3 installed in the flow channel part 2 is exemplified as the secondary flow generation mechanism. Meanwhile, instead of the ultrasonic vibrator 3, the secondary flow generation mechanism may be constituted by flow channel shape changing parts that are formed in a flow channel part 12 and change the shape of at least a part of the cross section in the direction of extension of a flow channel 17.

The solid-liquid separator 10 has a block-shaped flow channel part 12 assuming a microdevice, instead of the flow channel part 2 which was a straight tube in the solid-liquid separator 1 described above, for example. The flow channel part 12 may be formed by superimposing two flat plates, which are a first flat plate 13 and a second flat plate 14, in the Z direction. In this case, the flow channel 17 satisfying the same setting conditions as the flow channel 7 provided in the aforementioned flow channel part 2 is formed as a groove part on the upper surface side of the second flat plate 14 that is on the lower side. In contrast, the first flat plate 13 on the upper side is what is referred to as a lid body and is joined to the second flat plate 14 so as to cover the flow channel 17 with the lower surface thereof. The third sidewall 2c, the fourth sidewall 2d, and the second sidewall 2b in the aforementioned flow channel part 2 correspond to a first sidewall 14a, a second sidewall 14b, and a bottom wall 14c which are part of the groove part of the second flat plate 14 in the flow channel part 12. Further, the first sidewall 2a in the aforementioned flow channel part 2 corresponds to a part on the lower surface side of the first flat plate 13 of the flow channel part 12.

Further, in the solid-liquid separator 10, the flow channel shape changing parts constituting the secondary flow generation mechanism are a plurality of columns. The plurality of columns in the present embodiment are three columns that are formed on the bottom wall 14c of the second flat plate 14 and are located in the flow channel 17, and the three columns are a first column 14d, a second column 14e, and a third column 14f. These columns are cylinders, and the upper surface of each column is in contact with the lower surface of the first flat plate 13, for example. Due to the plurality of columns being provided in the flow channel 17, the shape of the flow channel 17, that is, the shape of the cross section of the flow channel 17, changes at the part where the columns are present, in the direction of extension of the flow channel 17. By appropriately changing the shape, size, arrangement, or installed number of the plurality of columns, the secondary flow can be generated in the fluid by these columns when the fluid in which the solid particles p are dispersed is introduced into the flow channel 17.

Even with this kind of solid-liquid separator 10, as with the solid-liquid separator 1 described above, separation efficiency can be enhanced with a simple shape or configuration. In particular, with the solid-liquid separator 10, the secondary flow generation mechanism can have a simple configuration without using power, for example.

(Third embodiment)

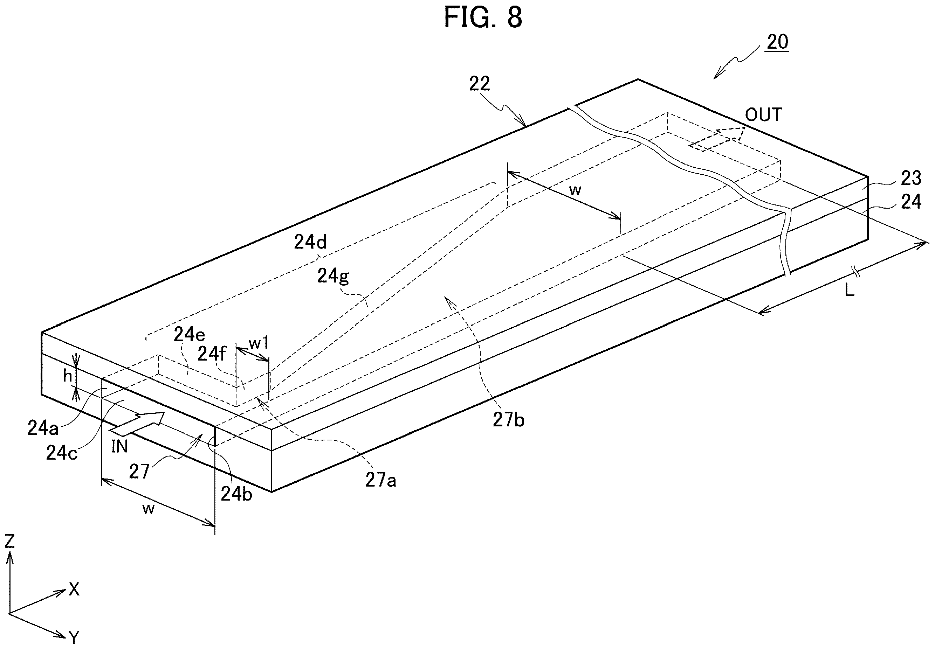

Fig. 8 is a schematic diagram showing the configuration of a solid-liquid separator 20 according to a third embodiment. In the solid-liquid separator 10 according to the second embodiment described above, the plurality of columns are exemplified as the flow channel shape changing parts constituting the secondary flow generation mechanism. However, the flow channel shape changing parts are not limited to the columns formed in this kind of flow channel part 12.

A flow channel part 22 of the solid-liquid separator 20 has a block-shape similar to the flow channel part 12 in the solid-liquid separator 10 according to the second embodiment. The flow channel part 22 may be formed of a first flat plate 23 and a second flat plate 24 corresponding to the first flat plate 13 and the second flat plate 14 in the solid-liquid separator 10 respectively. A flow channel 27 is formed as a groove part on the upper surface side of the second flat plate 24, as in the case of the second flat plate 14 in the solid-liquid separator 10, but the shape of the flow channel 27 is different from the shape of the flow channel 17 in the solid-liquid separator 10.

First, the first sidewall 14a, the second sidewall 14b, and the bottom wall 14c in the flow channel part 12 described above correspond to a first sidewall 24a, a second sidewall 24b, and a bottom wall 24c which are part of the groove part of the second flat plate 24 of the flow channel part 22. Further, in the flow channel part 22, the sidewall on the upper side in the Z direction of the flow channel 27 is part of the lower surface side of the first flat plate 23.

The solid-liquid separator 20 has, as a flow channel shape changing part, a Venturi structure part which generates a Venturi effect by providing a region where the cross section contracts in a part of the flow channel 27, instead of the plurality of columns in the solid-liquid separator 10 described above. For example, a Venturi structure part 24d in the present embodiment is a protrusion which is located on the bottom wall 24c of the second flat plate 24 and is surrounded by three protruding walls protruding in the Y direction as part of the first sidewall 24a, and the three protruding walls are a first protruding wall 24e, a second protruding wall 24f, and a third protruding wall 24g. The upper surface of the Venturi structure part 24d is in contact with the lower surface of the first flat plate 23.

The first protruding wall 24e is a wall part perpendicular to the X direction, which is the direction of extension of the flow channel 27, and is not in contact with the second sidewall 24b. The second protruding wall 24f is a wall part parallel to the first sidewall 24a and the second sidewall 24b, and is continuous with the first protruding wall 24e and is not in contact with the second sidewall 24b. Further, the third protruding wall 24g is a wall part that has one end in the X direction continuous with the second protruding wall 24f and the other end in the X direction continuous with the first sidewall 24a on the downstream side from the Venturi structure part 24d. That is, the third protruding wall 24g gradually becomes closer to the side of the first sidewall 24a from the side of the second protruding wall 24f, in the direction of extension of the flow channel 27.

According to the Venturi structure part 24d, a contracted part 27a is formed on the upstream side, and the contracted part 27a serves as a cross section (flow channel width w1 × flow channel height h) defined by the flow channel width w1 that is smaller than the flow channel width w. In the direction of extension of the flow channel 27, the contracted part 27a becomes a region corresponding to the length of the second protruding wall 24f in the X direction. Then, on the downstream side from the contracted part 27a, due to the third protruding wall 24g, the flow channel width gradually increases in the direction of extension of the flow channel 27, and an enlarged part 27b is formed of which the size of the cross section thereof ultimately returns to that of the cross section defined by the flow channel width w and the flow channel height h. Since the contracted part 27a is a region for temporarily increasing the flow velocity of the fluid flowing through the flow channel 27, the length of the second protruding wall 24f forming the contracted part 27a in the X direction may be sufficiently shorter than the length of the X direction component of the third protruding wall 24g forming the enlarged part 27b. By providing the Venturi structure part 24d in the flow channel 27, the shape of the cross section of the flow channel 27 changes between the contracted part 27a and the enlarged part 27b in the direction of extension of the flow channel 27. By appropriately changing the shape or size of this kind of Venturi structure part 24d, the secondary flow can be generated in the fluid by the Venturi structure part 24d when the fluid in which the solid particles p are dispersed is introduced into the flow channel 27.

Even with this kind of solid-liquid separator 20, as with the above described solid-liquid separator 10, the secondary flow generation mechanism can have a simple configuration without using power, for example.

(Fourth embodiment)

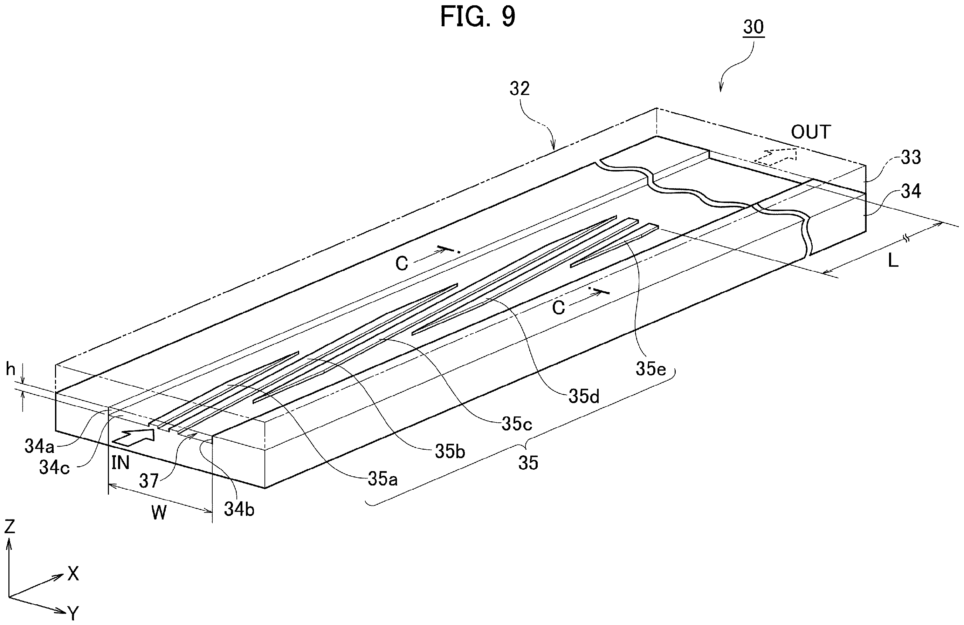

Fig. 9 is a schematic diagram showing the configuration of a solid-liquid separator 30 according to a fourth embodiment. Flow channel shape changing parts constituting a secondary flow generation mechanism may be a plurality of baffles 35 instead of the plurality of columns such as the first column 14d in the second embodiment or the Venturi structure part 24d in the third embodiment.

A flow channel part 32 of the solid-liquid separator 30 has a block-shape similar to the flow channel part 12 in the solid-liquid separator 10 according to the second embodiment. The flow channel part 32 may be formed of a first flat plate 33 and a second flat plate 34 corresponding to the first flat plate 13 and the second flat plate 14 in the solid-liquid separator 10. A flow channel 37 is formed as a groove part on the upper surface side of the second flat plate 34 as in the case of the second flat plate 14 in the solid-liquid separator 10, but the shape of the flow channel 37 is different from the shape of the flow channel 17 in the solid-liquid separator 10. In Fig. 9, the first flat plate 33 is drawn with a two-dot chain line in order to make the shape of the flow channel 37 clear overall.

The first sidewall 14a, the second sidewall 14b, and the bottom wall 14c in the flow channel part 12 of the solid-liquid separator 10 correspond to a first sidewall 34a, a second sidewall 34b, and a bottom wall 34c which are part of a groove part of the second flat plate 34 of the flow channel part 32. Further, in the flow channel part 32, the sidewall on the upper side in the Z direction of the flow channel 37 is a part of the lower surface side of the first flat plate 33. Furthermore, the cross section of the flow channel 37 is also defined by (flow channel width w × flow channel height h), as in each embodiment described above.

In the solid-liquid separator 30, the flow channel shape changing parts constituting the secondary flow generation mechanism are the plurality of baffles 35. The baffles 35 in the present embodiment are protrusions protruding from the bottom wall 34c of the second flat plate 34 toward the lower surface of the first flat plate 33. The upper surfaces of the baffles 35 are not in contact with the first flat plate 33. The plurality of baffles 35 have the same shape as one another and are arranged in the flow channel 37 with a certain regularity as described in detail below. In Fig. 9, five baffles 35 represented by a first plate 35a, a second plate 35b, a third plate 35c, a forth plate 35d, and a fifth plate 35e are exemplified. In Fig. 9, as an illustrative example in the drawing, the baffles 35 that intersect with an inlet or an outlet of the secondary flow generation mechanism are represented with a shape in which the part of the baffle toward the outside of the secondary flow generation mechanism from the intersecting position or the vicinity thereof is not present.

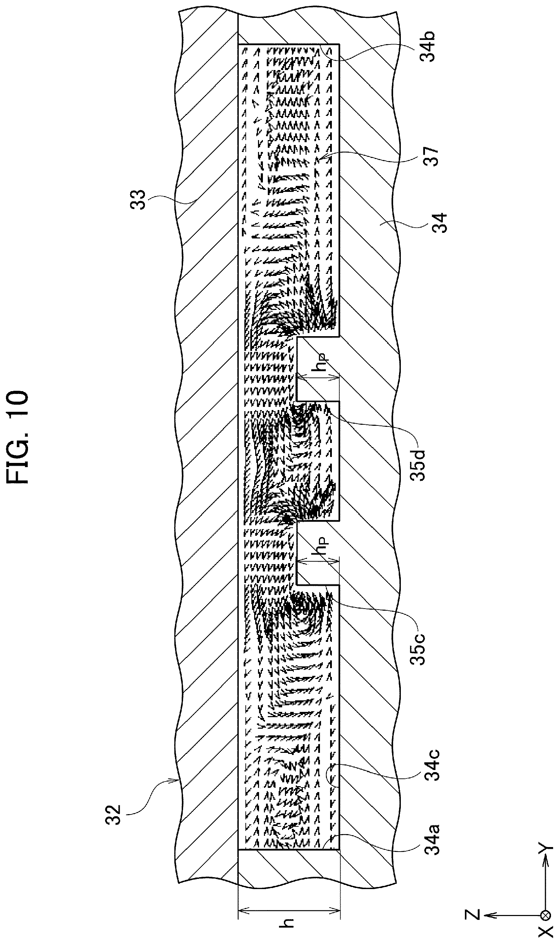

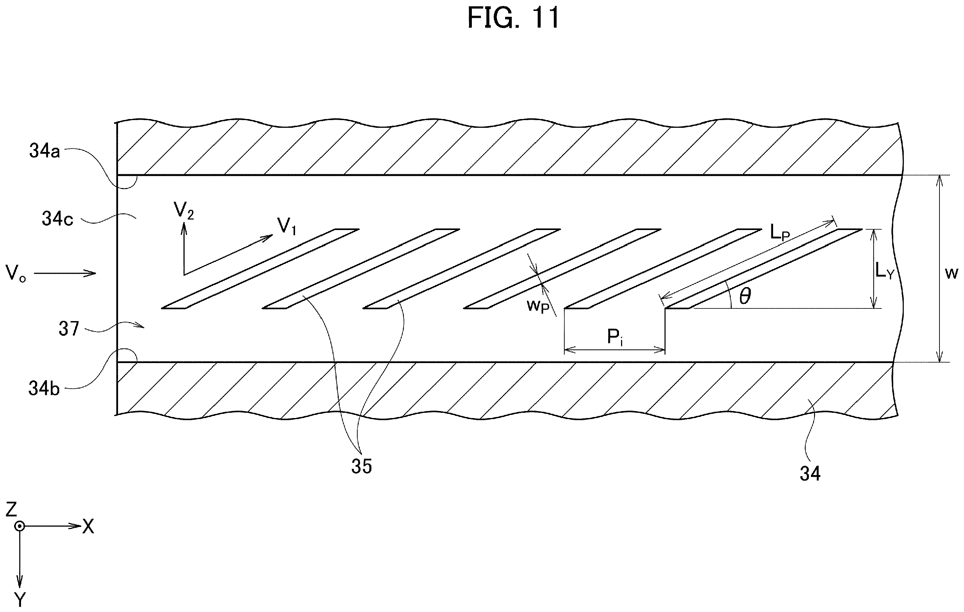

Fig. 10 is a cross sectional view which corresponds to the section C-C in Fig. 9, in which a part of the flow channel part 32 is cut in a plane perpendicular to the X direction, which is the direction of extension of the flow channel 37. In Fig. 10, the flow of the fluid flowing through the flow channel 37 at the cut plane is shown by using vectors. In addition, Fig. 11 is a schematic plan view for explaining the shape of the baffles 35 and the arrangement relationship of the baffles 35 when the baffles 35 are viewed along the Z direction.

The baffles 35 have a rod-like shape in which the direction of extension is the direction which is parallel to the bottom wall 34c along the XY plane and is inclined at an inclination angle $\theta$ relative to the X direction. However, both tips of each baffle 35 may be notched along the XZ plane. If the length of each baffle 35 in the extension direction is defined as a baffle length $L_P$, a length component $L_Y$ of each baffle 35 in the Y direction, which is the flow channel width direction, is expressed by $L_P \sin\theta$, and is smaller than the flow channel width w. Further, the baffles 35 are not in contact with either the first sidewall 34a or the second sidewall 34b. In the flow channel 37, n baffles 35 having such a shape are arranged along the X direction at equal intervals of a pitch $P_i$.

The shape of the cross section perpendicular to the extension direction of each baffle 35 is approximately rectangular. Hereinafter, regarding the cross section of each baffle 35, the height is represented as a baffle height $h_P$ and the width is represented as a baffle width $w_p$.

The baffle height $h_P$ is set as follows with the flow channel height h of the flow channel 37 as a reference, for example. First, the flow velocity of the fluid flowing through the flow channel 37 is defined as follows. $V_0$ is the main stream flow velocity of the fluid introduced into the flow channel 37 along the X direction, which is the direction of extension of the flow channel 37. $V_1$ is the first flow velocity in the direction along the extension direction of the baffles 35. $V_2$ is the second flow velocity in the Y direction, which is the flow channel width direction, expressed by formula (1) using the main stream flow velocity $V_0$.

[Formula 1]

$$V_2 = V_0 \tan\theta \qquad (1)$$

Further, the time t during which the main stream of the fluid passes through the section where the plurality of baffles 35 are provided is expressed by formula (2).
[Formula 2]

$$t = \frac{p_i n}{V_0} \qquad (2)$$

Further, in order to trap the solid particles p dispersed in the fluid in the vicinity of the first sidewall 34a or the second sidewall 34b, it is necessary that the flow in the flow channel width direction make at least one circuit around the cross section of the flow channel 27 while the main stream of the fluid passes through the section where the plurality of baffles 35 are provided. Thus, formula (3) holds.
[Formula 3]

$$V_2 t > 2w \qquad (3)$$

Here, first, if the baffle height $h_P$ is half the height of the flow channel height h, that is, if the baffle height $h_P$ is 0.5 h, the plurality of baffles 35 can generate the secondary flow the most efficiently.
Second, if the baffle height $h_P$ is lower than 0.5 h, the flow rate of the secondary flow is reduced. Therefore, assuming that the flow rate of the secondary flow decreases proportionally as the baffle height $h_P$ decreases, the above condition that the flow in the flow channel width direction makes at least circuit around the cross section of the flow channel 27 may be changed to the condition that the flow makes at least (0.5 h/$h_P$) circuit. In this case, formula (3) is modified to formula (4).
[Formula 4]

$$V_2 t > 2w \times \frac{0.5h}{h_P} \qquad (4)$$

Substituting formula (1) and formula (2) in formula (4) leads to formula (5).
[Formula 5]

$$\tan\theta > \frac{wh}{P_i n h_P} \qquad (5)$$

Therefore, if the baffle height $h_P$ is lower than 0.5 h, the pitch $P_i$ for the arrangement of the baffles 35, the installed number n of baffles 35, and the baffle height $h_P$ may be set for the flow channel 37 having an arbitrary flow channel width w and flow channel height h, in such a way as to satisfy the conditions of formula (5).

Third, if the baffle height $h_P$ is higher than 0.5 h, the flow rate of the secondary flow is also lower. Therefore, assuming that the flow rate of the secondary flow decreases proportionally as the baffle height $h_P$ increases, the above condition that the flow in the flow channel width direction makes at least circuit around the cross section of the flow channel 27 may be changed to the condition that the flow makes at least (0.5 h / (h - $h_P$)) circuit. In this case, formula (3) is modified to formula (6).
[Formula 6]

$$V_2 t > 2w \times \frac{0.5h}{h - h_P} \qquad (6)$$

Substituting formula (1) and formula (2) in formula (6) leads to formula (7).
[Formula 7]

$$\tan\theta > \frac{wh}{P_i n(h - h_P)} \qquad (7)$$

Therefore, if the baffle height $h_P$ is higher than 0.5 h, the pitch $P_i$ for the arrangement of the baffles 35, the installed number n of baffles 35, and the baffle height $h_P$ may be set for the flow channel 37 having an arbitrary flow channel width w and flow channel height h, in such a way as to satisfy the conditions of formula (7).
That is, the upper limit of the baffle height $h_P$ when the plurality of baffles 35 are employed as the secondary flow generation mechanism may be specified based on formula (7), and the lower limit of the baffle height $h_P$ may be specified based on formula (5).
In addition, the baffle width $w_p$ is set as follows based on the condition that it is desirable that the blockage rate of the cross section of the flow channel 37 be 0.5 or less in order to reduce the pressure loss in the flow channel 37, for example. The cross section of the flow channel 37 in the absence of the baffles 35 is expressed as (flow channel width w × flow channel height h). If the number of baffles 35 in the cross section is m, the upper limit of the baffle width $w_p$ can be set to satisfy formula (8) in order to satisfy the condition that the blockage rate is 0.5 or less. Meanwhile, it is desirable that the lower limit of the baffle width $w_p$ be set as small as possible.
[Formula 8]

$$w_p h_p m < 0.5w \times h \qquad (8)$$

Further, the inclination angle θ of the baffles 35 determines the range defined by the upper and lower limits based on formulas (5) and (7), and may be set to a value included in the range. However, if the inclination angle θ is too large, flow separation may occur and the secondary flow may not be as intended. Therefore, it is desirable that the inclination angle θ be 45 degrees or less and it is even more desirable that the angle be 30 degrees or less.

In the solid-liquid separator 30, by adopting the plurality of baffles 35 as the flow channel shape changing parts, it can be seen that the secondary flow in the cross-section direction is generated in the fluid flowing through the flow channel 37, as is obvious from the directions of the vectors at each position in the flow channel 37 shown in Fig. 10. In addition, if a plurality of cylinders, such as the first column 14d exemplified in the second embodiment, are adopted as the flow channel shape changing parts, the secondary flow is generated strongly immediately behind the cylinders but gradually dampens toward the downstream side. Meanwhile, if the plurality of baffles 35 are adopted as the flow channel shape changing parts, there is an advantage that the secondary flow hardly dampens.

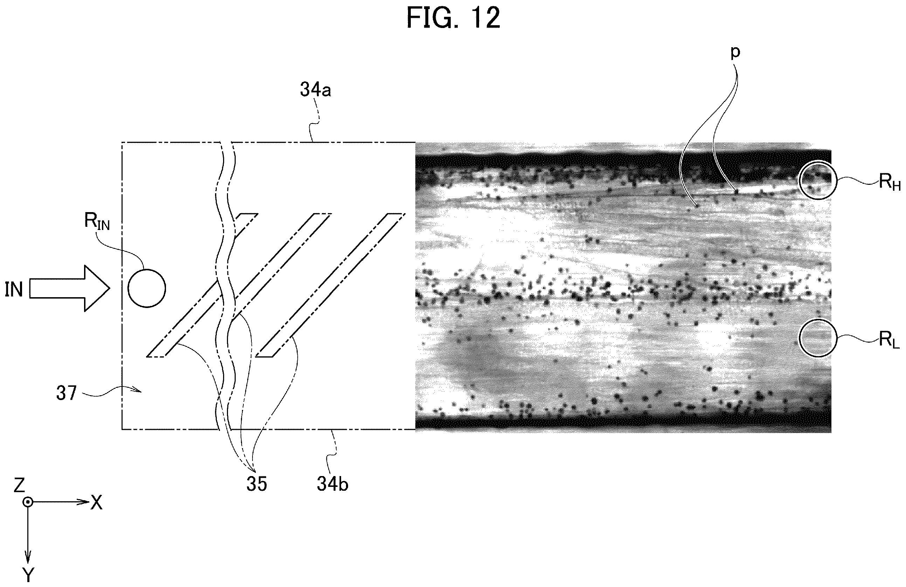

Fig. 12 is a fluid image showing the behavior of the solid particles p in fluid that has passed the secondary flow generation mechanism. This fluid image was obtained by capturing an image of fluid flowing through a part of the flow channel 37 along the Z direction. Here, the secondary flow generation mechanism consisting of the plurality of baffles 35 is located on the upstream side of the flow channel 37 along the X direction. In Fig. 12, in order to exemplify the position of the secondary flow generation mechanism relative to the position in the flow channel 37 where the fluid image was acquired, the portion corresponding to the secondary flow generation mechanism is shown adjacent to the fluid image by using a two-dot chain line.

As shown in Fig. 12, even in the solid-liquid separator 30, it can be seen that due to the fluid in which the solid particles p are dispersed flowing through the flow channel 37, the solid particles p are trapped at least in the vicinity of the first sidewall 34a or the second sidewall 34b. As an example, when the fluid image shown in Fig. 12 was obtained, the particle concentration in an inlet region $R_{IN}$ of the flow channel 37 was 0.55 vol%. In contrast, the particle concentration in a high concentration region $R_H$ where the solid particles p were gathered on the outlet side of the flow channel 37 was 1.33 vol%. Meanwhile, the particle concentration in a low concentration region $R_L$ where the number of solid particles p was small on the outlet side of the flow channel 37 was 0.11 vol%.

In addition, the solid-liquid separator 30 may be able to trap the solid particles p not only in the vicinity of the first sidewall 34a or the second sidewall 34b but also in the center region of the flow channel 37 in the flow channel width direction as shown in Fig. 12 by employing the plurality of baffles 35 as the secondary flow generation mechanism.

Further, with the solid-liquid separator 30, as with the solid-liquid separator 10 and the like described above, the secondary flow generation mechanism can have a simple configuration without using power, for example.

In the example of the solid-liquid separator 30 described above, the plurality of baffles 35 are provided on the bottom wall 34c of the second flat plate 34, which is on the flow channel floor side, and protrude from the bottom wall 34c toward the lower surface of the first flat plate 33. Meanwhile, the plurality of baffles 35 may be provided on the first flat plate 33, which is on the ceiling side, and protrude from the first flat plate 33 toward the bottom wall 34c. Alternatively, the plurality of baffles 35 may be provided on both the bottom wall 34c of the second flat plate 34, which is on the flow channel floor side, and on the first flat plate 33, which is on the ceiling side.

Further, in the example of the solid-liquid separator 30 described above, in the entire secondary flow generation mechanism, the plurality of baffles 35 are arranged at a pitch $P_i$ having a single value. Meanwhile, in the entire secondary flow generation mechanism, the plurality of baffles 35 may be arranged at pitches $P_i$ having a plurality of values, that is, the baffles 35 may be arranged by changing the value of the pitch $P_i$ in the middle. However, if the value of the pitch $P_i$ is too small, the viscous resistance increases, and therefore it is desirable that the value of the pitch $P_i$ be set larger than the flow channel height h.

Further, in the example of the solid-liquid separator 30 described above, the plurality of baffles 35 are provided at the center of the flow channel width w of the flow channel 37. That is, in the flow channel width direction, the distance from the baffles 35 to the first sidewall 34a is the same as the distance from the baffles 35 to the second sidewall 34b. Meanwhile, the plurality of baffles 35 may be provided closer to the first sidewall 34a than the second sidewall 34b or, conversely, closer to the second sidewall 34b than to the first sidewall 34a, in the flow channel width direction.

Further, in the solid-liquid separator 10 shown in Fig. 7, the solid-liquid separator 20 shown in Fig. 8, and the solid-liquid separator 30 shown in Fig. 9 and the like, a case has been exemplified where the flow channel shape changing part is formed in the block-shaped flow channel part 12, the flow channel part 22, or the flow channel part 32. Meanwhile, for example, the flow channel shape changing part may be provided in the flow channel part 2, which is a straight tube in the solid-liquid separator 1 as the secondary flow generation mechanism instead of the ultrasonic vibrator 3. Furthermore, in the solid-liquid separator 10 shown in Fig. 7, the solid-liquid separator 20 shown in Fig. 8, and the solid-liquid separator 30 shown in Fig. 9 and the like, a case has been exemplified where the block-shaped flow channel part 12, the flow channel part 22, or the flow channel part 32 are all composed of a combination of two flat plates. Meanwhile, the flow channel part 12 with the flow channel 17, the flow channel part 22 with the flow channel 27, or the flow channel part 32 with the flow channel 37 may be integrally formed by using three-dimensional metal additive manufacturing technology, for example.

(Solid-liquid separation system)

Next, a description will be given regarding a solid-liquid separation system employing at least any of the solid-liquid separators, as an application example of the solid-liquid separators (the solid-liquid separator 1 and the like) according to the above embodiments.

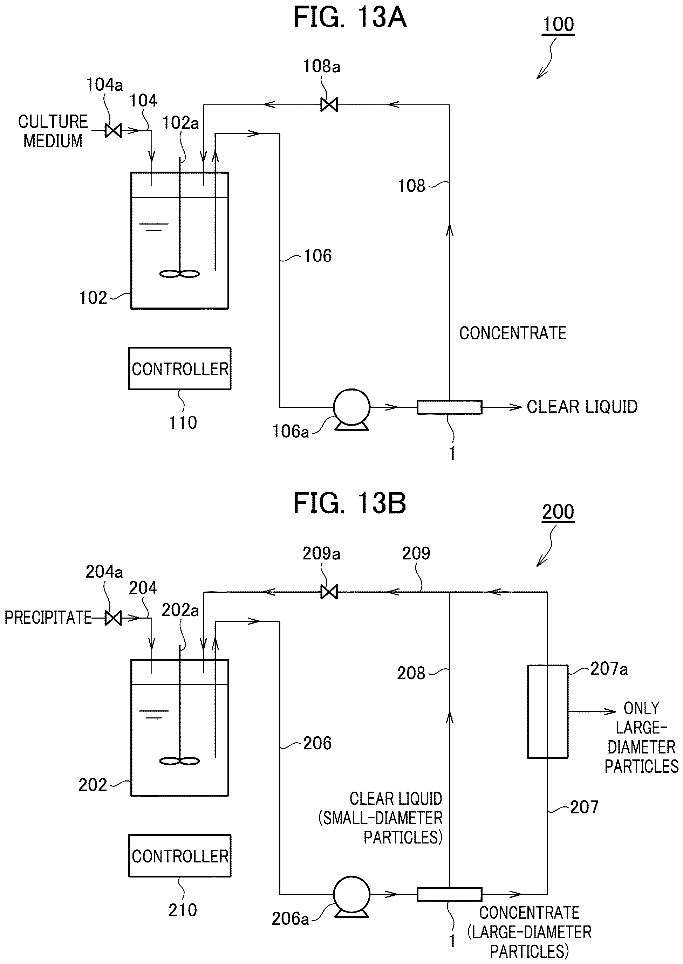

Figs. 13A and 13B are schematic diagrams showing the configuration of solid-liquid separation systems having the solid-liquid separators (the solid-liquid separator 1 and the like) according to the above embodiments. Figs. 13A and 13B exemplify the case where the solid-liquid separation system includes the solid-liquid separator 1.

Fig. 13A is a schematic diagram showing a cell culture device (an animal cell continuous culture device) 100 as an example of a solid-liquid separation system according to the present embodiment. In the cell culture device 100, a culture fluid is assumed as the fluid in which the solid particles p are dispersed. The cell culture device 100 includes a culture tank 102 as a storage tank for storing a culture medium and a pump 106a as a liquid transporting part for transporting the culture fluid from the culture tank 102 to the solid-liquid separator 1. The culture medium is supplied to the culture tank 102 via a medium additional pipe 104 having a first supply valve 104a. The culture tank 102 includes a stirrer 102a and cultures the culture medium. The culture fluid in the culture tank 102 is supplied to the solid-liquid separator 1 via a culture fluid supply pipe 106 connected to the pump 106a. The solid-liquid separator 1 can separate the culture fluid introduced into the flow channel 7 into a concentrate and a clear liquid. The clear liquid is collected as it is. Meanwhile, the concentrate is returned to the culture tank 102 via a concentrate return pipe 108 having a second supply valve 108a. Further, the cell culture device 100 has at least a controller 110 for adjusting at least the flow rate or velocity of the culture fluid by controlling the operation of the pump 106a. The controller 110 may also control the operation of the stirrer 102a, the opening and closing operation of the first supply valve 104a or the second supply valve 108a, and the like.

Fig. 13B is a schematic diagram showing a precipitation device 200 as an example of the solid-liquid separation system according to the present embodiment. In the precipitation device 200, a fluid containing crystallized large-diameter particles or small-diameter particles is assumed as the fluid in which the solid particles p are dispersed. The precipitation device 200 includes a precipitation tank 202 as a storage tank for storing the precipitate, a pump 206a as a liquid transporting part for transporting the fluid from the precipitation tank 202 to the solid-liquid separator 1, and a separation membrane 207a for extracting only the large-diameter particles from the concentrate separated by the solid-liquid separator 1. The precipitate is supplied to the precipitation tank 202 via a precipitate additional pipe 204 having a first supply valve 204a. The precipitation tank 202 includes a stirrer 202a and promotes the precipitation. The fluid in the precipitation tank 202 is supplied to the solid-liquid separator 1 via a fluid supply pipe 206 connected to the pump 206a. The solid-liquid separator 1 can separate the fluid introduced into the flow channel 7 into a concentrate containing mainly large-diameter particles and a clear liquid containing mainly small-diameter particles. The concentrate is sent to the separation membrane 207a via a concentrate supply pipe 207. The large-diameter particles extracted from the concentrate by the separation membrane 207a are collected as they are. Thereafter, the fluid from which the large-diameter particles have been extracted is returned to the precipitation tank 202 as the clear liquid via a clear liquid return pipe 209 having a second supply valve 209a. Meanwhile, the clear liquid separated by the solid-liquid separator 1 is sent directly to the clear liquid return pipe 209 via a bypass pipe 208 and returned to the precipitation tank 202. Further, the precipitation device 200 includes at least a controller 210 for adjusting at least the flow rate or velocity of the fluid by controlling the operation of the pump 206a. The controller 210 may also control the operation of the stirrer 202a, the opening and closing operation of the first supply valve 204a or the second supply valve 209a, and the like.

Next, a description will be given regarding the effect of the solid-liquid separation system according to the present embodiment, such as the cell culture device 100 and the precipitation device 200.

The solid-liquid separation system includes the solid-liquid separator according to the above embodiment, the storage tank for storing the fluid, the liquid transporting part for transporting the fluid from the storage tank to the solid-liquid separator, and at least a controller for adjusting at least the flow rate or velocity of the fluid by controlling the operation of the liquid transporting part.

Since the solid-liquid separation system includes the solid-liquid separator according to the above embodiment, as the entire system, it is possible to enhance separation efficiency or it is possible to easily obtain a desired resolution while maintaining the processing volume.

Further, in the solid-liquid separation system, the solid particles p dispersed in the fluid may receive the drag $F_D$ induced by the secondary flow and the lift $F_L$ induced by the main stream of the fluid, and the lift $F_L$ may be obtained based on the particle diameter $D_p$ of the solid particles p to be separated.

With this solid-liquid separation system, a more appropriate lift $F_L$ can be applied to solid particles p to be separated to make it easier for the particles to concentrate in the vicinity of the sidewalls on the short sides in the flow channel (the flow channel 7 or the like, the same applies hereinafter). The sidewalls on the short sides correspond to the third sidewall 2c and the fourth sidewall 2d in the solid-liquid separator 1, and to the first sidewall 14a and the second sidewall 14b in the solid-liquid separator 10.

Further, in the solid-liquid separation system, the flow channel height h may be determined based on the lift $F_L$ which is obtained with the particle diameter $D_p$ of the solid particles p to be separated as a reference.

With this solid-liquid separation system, the lift $F_L$ induced from the main stream of the fluid in the flow channel can be adjusted to have a desired magnitude by setting the flow channel height h of the flow channel to an appropriate dimension.

Further, in the solid-liquid separation system, the drag $F_D$ may be determined so as to balance with the lift $F_L$ in the cross-section direction inside the boundary layer of the fluid.

With this solid-liquid separation system, the drag $F_D$ is mechanically in equilibrium with the lift $F_L$ in the cross-section direction inside the boundary layer of the fluid, and therefore the solid particles p to be separated can be more easily concentrated in the vicinity of the sidewalls on the short sides of the flow channel.

Further, in the solid-liquid separation system, the secondary flow generation mechanism may be the ultrasonic vibrator 3 which is installed in the flow channel part 2 and emits ultrasonic waves from the sidewalls on the long sides of the flow channel 7 toward the inside of the flow channel 7. In this case, the solid-liquid separation system may have the ultrasonic oscillator 4 that supplies power to the ultrasonic vibrator 3. The controller 110 may adjust the drag $F_D$ by changing the velocity of the secondary flow (for example, the representative velocity U) by changing the frequency or sound pressure of the ultrasonic vibrator 3 relative to the ultrasonic oscillator 4.

With this solid-liquid separation system, the controllability of the fluid force is enhanced, making it easier to adjust the drag $F_D$ that induces the secondary flow, for example, and the range of the solid particles p to be separated increases. In addition, when the secondary flow is an acoustic flow, especially when the acoustic impedance difference between the liquid phase and the solid particles is large, the acoustic reflection force acts on the solid particles p. Therefore, since the acoustic reflection force $F_R$ is applied to the solid particles p dispersed in the fluid in addition to the lift $F_L$ and the drag $F_D$, the controller 110 has the advantage of making it easier to adjust the equilibrium position of the solid particles p in the cross-section direction of the main stream of the fluid in the flow channel 7.

Here, the cell culture device 100 and the precipitation device 200 have been shown as examples of the solid-liquid separation system according to the present embodiment, but application examples are not limited to these devices. For example, as long as the solid-liquid separator according to an above embodiment is adopted, the solid-liquid separation system may be an inspection device for performing quality inspection of pharmaceuticals, food, and the like, combined with a camera or inspection equipment such as laser equipment.

Although some embodiments have been described, it is possible to change or modify the embodiments based on the above disclosure. All components of the above embodiments and all features recited in the claims may be individually extracted and combined as long as they do not contradict each other.

The present application claims priority based on Japanese Patent Application No. 2020-211418, filed on December 21, 2020, the entire disclosed content of which is incorporated herein by reference.

REFERENCE SIGNS LIST

| | |
|---|---|
| 1 | Solid-liquid separator |
| 2 | Flow channel part |
| 2a | First sidewall |
| 2b | Second sidewall |
| 3 | Ultrasonic vibrator |
| 4 | Ultrasonic oscillator |
| 7 | Flow channel |
| 10 | Solid-liquid separator |
| 12 | Flow channel part |
| 14d | First column |
| 14e | Second column |
| 14f | Third column |
| 17 | Flow channel |
| 20 | Solid-liquid separator |
| 22 | Flow channel part |
| 24d | Venturi structure part |
| 27 | Flow channel |
| 30 | Solid-liquid separator |
| 32 | Flow channel part |
| 35 | Baffle |
| 37 | Flow channel |
| 100 | Cell culture device |
| 102 | Culture tank |
| 106a | Pump |
| 110 | Controller |
| 200 | Precipitation device |
| 202 | Precipitation tank |
| 206a | Pump |
| 210 | Controller |
| $A_R$ | Aspect ratio |
| $D_p$ | Particle diameter |
| $F_D$ | Drag |
| $F_L$ | Lift |
| h | Flow channel height |
| p | Solid particles |
| w | Flow channel width |

**Claims**

1. A solid-liquid separator that separates solid particles from a fluid in which the solid particles are dispersed, the solid-liquid separator comprising:

a flow channel part where a linear flow channel into which the fluid is introduced is formed; and
a secondary flow generation mechanism that generates a secondary flow in a cross-section direction in the fluid flowing on an upstream side of the flow channel, wherein
the flow channel includes a rectangular cross section defined by a flow channel width and a flow channel height perpendicular to the flow channel width, and
an aspect ratio of the cross section at least on a downstream side from the secondary flow generation mechanism in the flow channel is in a range from 10 to 100, the aspect ratio being expressed by a ratio of the flow channel width to the flow channel height.

2. The solid-liquid separator according to claim 1, wherein
if a particle diameter of the solid particles is in a range from 1 μm to 1 mm, the flow channel height is set to a dimension not less than 10 times and not more than 100 times the particle diameter of the solid particles to be separated.

3. The solid-liquid separator according to claim 2, wherein
a length in a direction of extension on the downstream side from the secondary flow generation mechanism in the flow channel is set to a dimension not less than 100 times and not more than 10,000 times the flow channel width.

4. The solid-liquid separator according to any one of claims 1 to 3, wherein
the secondary flow generation mechanism is an ultrasonic vibrator that is installed in the flow channel part and emits an ultrasonic wave from a sidewall on a long side of the flow channel toward an inside of the flow channel.

5. The solid-liquid separator according to any one of claims 1 to 3, wherein
the secondary flow generation mechanism is a flow channel shape changing part that is formed in the flow channel part and changes a shape of at least a part of the cross section in a direction of extension of the flow channel.

6. A solid-liquid separation system comprising:

a solid-liquid separator that separates solid particles from a fluid in which the solid particles are dispersed;
a storage tank that stores the fluid;
a liquid transporting part that transports the fluid from the storage tank to the solid-liquid separator; and

a controller that adjusts at least a flow rate or a velocity of the fluid by at least controlling an operation of the liquid transporting part, wherein the solid-liquid separator includes:

a flow channel part where a linear flow channel into which the fluid is introduced is formed; and
a secondary flow generation mechanism that generates a secondary flow in a cross-section direction in the fluid flowing on an upstream side of the flow channel,
the flow channel includes a rectangular cross section defined by a flow channel width and a flow channel height perpendicular to the flow channel width, and
an aspect ratio of the cross section at least on a downstream side from the secondary flow generation mechanism in the flow channel is in a range from 10 to 100, the aspect ratio being expressed by a ratio of the flow channel width to the flow channel height.

7. The solid-liquid separation system according to claim 6, wherein

the solid particles dispersed in the fluid receive drag induced by the secondary flow and lift induced by a main stream of the fluid, and
the lift is obtained based on a particle diameter of the solid particles to be separated.

8. The solid-liquid separation system according to claim 7, wherein
the flow channel height is determined based on the lift obtained with the particle diameter of the solid particles to be separated as a reference.

9. The solid-liquid separation system according to claim 7 or 8, wherein
the drag is determined so as to balance with the lift in the cross-section direction inside a boundary layer of the fluid.

10. The solid-liquid separation system according to any one of claims 7 to 9, wherein

the secondary flow generation mechanism is an ultrasonic vibrator that is installed in the flow channel part and emits an ultrasonic wave from a sidewall on a long side of the flow channel toward an inside of the flow channel,
the solid-liquid separation system includes an ultrasonic oscillator that supplies power to the ultrasonic vibrator, and
the controller adjusts the drag by changing the velocity of the secondary flow by changing a frequency or sound pressure of the ultrasonic vibrator relative to the ultrasonic oscillator.

# FIG. 1

EP 4 265 336 A1

# FIG. 2

EP 4 265 336 A1

# FIG. 3

# FIG. 4

# FIG. 5

# FIG. 6

# FIG. 7

# FIG. 8

EP 4 265 336 A1

# FIG. 9

EP 4 265 336 A1

# FIG. 10

EP 4 265 336 A1

FIG. 11

# FIG. 12

# FIG. 13A

# FIG. 13B

# EP 4 265 336 A1

## INTERNATIONAL SEARCH REPORT

| International application No. |
|---|
| **PCT/JP2021/046912** |

### A. CLASSIFICATION OF SUBJECT MATTER

***B03B 5/00***(2006.01)i; ***G01N 37/00***(2006.01)i; ***B01J 19/00***(2006.01)i
FI:    B03B5/00 Z; B01J19/00 321; G01N37/00 101

According to International Patent Classification (IPC) or to both national classification and IPC

### B. FIELDS SEARCHED

Minimum documentation searched (classification system followed by classification symbols)

 B03B5/00; G01N37/00; B01J19/00

Documentation searched other than minimum documentation to the extent that such documents are included in the fields searched

 Published examined utility model applications of Japan 1922-1996
 Published unexamined utility model applications of Japan 1971-2022
 Registered utility model specifications of Japan 1996-2022
 Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-535912 A (ERYSAVE AB) 02 December 2004 (2004-12-02)<br> claims, paragraphs [0018], [0020], [0036], fig. 4, 10 | 1-4, 6-10 |
| X | JP 2020-25900 A (TOSOH CORP) 20 February 2020 (2020-02-20)<br> claims, paragraphs [0012], [0015], [0025], [0026], [0030], fig. 1, 2, 5 | 1-3, 5-9 |
| X | WO 2011/078115 A1 (JOSHO GAKUEN EDUCATIONAL FOUNDATION) 30 June 2011 (2011-06-30)<br> claims, paragraph [0037], fig. 1, 2 | 1-3, 5-9 |
| A | JP 2015-535728 A (MASSACHUSETTS INSTITUTE OF TECHNOLOGY) 17 December 2015 (2015-12-17) | 1-10 |
| A | WO 2020/139210 A1 (MIKRO BIYOSISTEMLER ELEKTRONIK SANAYI VE TICARET A.S.) 02 July 2020 (2020-07-02) | 1-10 |
| A | CN 109967150 A (UNIV HOHAI CHANGZHOU) 05 July 2019 (2019-07-05) | 1-10 |
| A | US 2011/0096327 A1 (UNIVERSITY OF CINCINNATI) 28 April 2011 (2011-04-28) | 1-10 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 February 2022** | **01 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2021/046912**

| Patent document cited in search report | | | Publication date (day/month/year) | Patent family member(s) | | | Publication date (day/month/year) |
|---|---|---|---|---|---|---|---|
| JP | 2004-535912 | A | 02 December 2004 | US 2004/0069717 A1 fig. 4, 10, paragraphs [0041], [0042], [0044], [0064], claims US 2004/0069708 A1 WO 2002/072235 A1 WO 2002/072234 A1 EP 1365849 A1 EP 1365850 A1 CA 2439257 A1 | | | |
| JP | 2020-25900 | A | 20 February 2020 | (Family: none) | | | |
| WO | 2011/078115 | A1 | 30 June 2011 | US 2012/0261356 A1 fig. 1, 2, paragraph [0037], claims CN 102665847 A | | | |
| JP | 2015-535728 | A | 17 December 2015 | US 2015/0238963 A1 WO 2014/046621 A1 EP 2897730 A1 EP 3628401 A1 KR 10-2015-0061643 A CN 104797340 A | | | |
| WO | 2020/139210 | A1 | 02 July 2020 | WO 2020/139218 A1 | | | |
| CN | 109967150 | A | 05 July 2019 | (Family: none) | | | |
| US | 2011/0096327 | A1 | 28 April 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018089557 A

- JP 2020211418 A